(19) **Europäisches Patentamt**
**European Patent Office**
**Office européen des brevets**

(11) **EP 4 711 813 A1**

(12) **EUROPEAN PATENT APPLICATION**

(43) Date of publication:
 **18.03.2026 Bulletin 2026/12**

(21) Application number: **24200935.5**

(22) Date of filing: **17.09.2024**

(51) International Patent Classification (IPC):
 **G01S 13/00** *(2006.01)* **G01S 13/02** *(2006.01)*
 **G01S 13/06** *(2006.01)*

(52) Cooperative Patent Classification (CPC):
 **G01S 13/0209; G01S 13/003; G01S 13/06**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(71) Applicant: **NXP B.V.**
 **5656 AG Eindhoven (NL)**

(72) Inventors:
 • **Tertinek, Stefan**
  **5656 AG Eindhoven (NL)**
 • **Lugitsch, David**
  **5656 AG Eindhoven (NL)**
 • **Leong, Frank**
  **5656 AG Eindhoven (NL)**

(74) Representative: **Krott, Michel**
 **NXP Semiconductors**
 **Intellectual Property Group**
 **High Tech Campus 60**
 **5656 AG Eindhoven (NL)**

(54) **FREQUENCY STITCHING FOR RADAR SYSTEMS**

(57) A radar system (120) comprising a first transmitter (124) and a first receiver (125), a second transmitter (126) and a second receiver (127) and a processor (122), wherein the processor (122) is configured to determine a channel sequence for frequency stitching; divide the channel sequence into a first portion and a second portion; instruct the first transmitter (124) to transmit, over a first time period, an RF signal on each RF channel of the first portion of the channel sequence; instruct the second transmitter (126) to transmit, over a second time period, an RF signal on each RF channel of the second portion of the channel sequence, wherein the second time period at least partially overlaps with the first time period; and generate a frequency-stitched channel impulse response from reflected RF signals received at each receiver in response to the RF signals transmitted.

Figure 6

**Description**

TECHNICAL FIELD

The present disclosure relates to apparatus and methods for performing frequency stitching for radar systems.

BACKGROUND

Frequency stitching is a known technique applicable to radar systems in which a total effective bandwidth larger than the RF channel bandwidth is achieved by combining (or stitching together) the channel impulse responses from multiple adjacent channels.
The present disclosure seeks to provide improved apparatus and methods for performing frequency stitching in radar systems.

SUMMARY

Aspects of the present disclosure are set out in the accompanying independent and dependent claims. Combinations of features from the dependent claims may be combined with features of the independent claims as appropriate and not merely as explicitly set out in the claims.
According to a first aspect of the present disclosure, there is provided a radar system, comprising a first transmitter, a second transmitter, a first receiver, a second receiver, and a processor electrically connected to the first and second transmitters and the first and second receivers. The processor is configured to determine a channel sequence for frequency stitching, wherein the channel sequence comprises a plurality of RF channels, each RF channel having a respective carrier frequency and a bandwidth; divide the channel sequence into a first portion and a second portion; instruct the first transmitter to transmit, over a first time period, an RF signal on each RF channel of the first portion of the channel sequence; instruct the second transmitter to transmit, over a second time period, an RF signal on each RF channel of the second portion of the channel sequence, wherein the second time period at least partially overlaps with the first time period; and generate a frequency-stitched channel impulse response from reflected RF signals received at each receiver in response to the RF signals transmitted.
Thus, the radar system is configured to control a multi-transmitter frequency stitching process.
It will be appreciated that each RF signal transmitted by the first transmitter or the second transmitter is an RF signal modulated onto the respective carrier frequency of respective RF channel of the channel sequence.
The radar system may comprise additional circuitry or components common to radar devices. It will be appreciated that each transmitter may equivalently be referred to as a transmitter unit, wherein the unit may comprise a plurality of components and/or circuits.
It will be appreciated that each receiver may equivalently be referred to as a receiver unit, wherein the unit may comprise a plurality of components and/or circuits.
For example, each transmitter may have an associated carrier generation unit.
Each transmitter may comprise one or more of a RF digital-to-analog converter, or a mixer, or a power amplifier.
Each carrier generation unit may comprise an RF phase-locked loop and local oscillator generation circuits, such as frequency dividers.
Each receiver may comprise one or more of a low-noise amplifier, or a mixer, or analog filters.
Optionally, the radar system may be monostatic. Thus, the receivers and transmitters may be collocated. Optionally, the first transmitter and the first receiver may form a first monostatic unit and the second transmitter and the second receiver may form a second monostatic unit.
Optionally, the radar system may be multistatic. Thus, the receivers may be physically separated from the transmitters (e.g. provided in separate units).
It will be appreciated that it is not essential for the antennae to form part of the radar system. Often, said antenna or antennae will be provided externally / separately to the radar system comprising the transmitter(s) and receiver(s).
The first transmitter is configured to be coupled to a first antenna, and the second transmitter is configured to be coupled to a second antenna. In the present disclosure the term "coupled" may refer to a wired or a wireless electric connection.
The first receiver may be configured to be coupled to the first antenna, or an additional antenna (e.g. a fourth antenna).
The second receiver may be configured to be coupled to the second antenna, or an additional antenna (e.g. fifth antenna).
It will be appreciated that the radar system may be comprised of a plurality of components in communication with each other. In some embodiments, the radar system may comprise a plurality of microchips or integrated circuits. In some

EP 4 711 813 A1

embodiments, the radar system may be implemented on a single chip (i.e. a system-on-chip).

The processor may comprise a plurality of processors, or a plurality of processing resources, or a plurality of processing units or devices. In other embodiments, a single processor may be provided.

Optionally, each RF channel has a bandwidth of approximately 500 MHz, or 1 GHz. In some embodiments, each RF channel has a bandwidth of 499.2 MHz.

A time gap may be provided between each RF signal transmitted.

Optionally, the second time period and the first time period are concurrent, or the second time period and the first time period completely overlap.

Optionally, each portion of the channel sequence comprises at least two of the plurality of RF channels.

Optionally, the plurality of RF channels in the channel sequence do not overlap. Thus, the respective carrier frequency and bandwidth of each RF channel may be selected such that a frequency gap is provided between each adjacent RF channel.

Optionally, adjacent RF channels in the channel sequence at least partially overlap.

Optionally, each RF signal is an Ultra-Wide-Band (UWB) RF signal. Thus, the radar system may be a UWB radar system.

Optionally, the plurality of RF channels in the channel sequence comprises channels as defined in the IEEE 802.15.4 standard. For example, the channel sequence may comprise channels CH5, CH6, CH8, CH9.

In some embodiments of this disclosure, the processor may divide the channel sequence into three or more portions, wherein each portion of the channel sequence is associated with a respective transmitter.

The processor may be configured to generate a frequency-stitched channel impulse response from reflected RF signals received at each receiver in response to the RF signals transmitted.

Optionally, the radar system further comprises a third transmitter and a third receiver and the processor is further configured to divide the channel sequence into the first portion, the second portion and a third portion.

Optionally, the processor is further configured to instruct the third transmitter to transmit, over a third time period, an RF signal on each RF channel of the third portion of the channel sequence, wherein the third time period at least partially overlaps with at least one of the first time period or the second time period.

Optionally, the processor is further configured to generate a frequency-stitched channel impulse response from reflected RF signals received at the first receiver, the second receiver and the third receiver in response to the RF signals transmitted.

Optionally, the third time period at least partially overlaps with both the first time period and the second time period.

Optionally, the third time period is concurrent with both the first time period and the second time period.

Optionally, the radar system further comprises a plurality of antennae, each antenna being coupled to a respective transmitter and/or receiver of the radar system. Thus, in some embodiments the radar system may include the antennae.

Optionally, the antennae are mounted via an antenna-in-package (AiP) configuration.

Optionally, the receiver may be coupled to the same antenna as the associated transmitter. Alternatively, the receiver may be coupled to an additional (different) antenna.

Thus, the radar system may comprise at least a first antenna and a second antenna. The first antenna is coupled to the first transmitter and the second antenna is coupled to the second transmitter.

Optionally, the first receiver is coupled to the first antenna, or the first receiver is coupled to a further antenna (e.g. a third or fourth antenna).

Optionally, the second receiver is coupled to the second antenna, or the second receiver is coupled to a further antenna (e.g. a fourth or fifth antenna).

The radar system may be provided in a vehicle, such that the radar system is, or forms part of, an automotive radar system.

Optionally, the radar system may be (or form part of) a child presence detection system, or an adaptive cruise control system.

According to a second aspect of the present disclosure, there is provided a method of performing a multi-transmitter frequency stitching process, the method comprising determining a channel sequence for frequency stitching, wherein the channel sequence comprises a plurality of RF channels, each RF channel having a respective carrier frequency and a bandwidth; dividing the channel sequence into a first portion and a second portion; transmitting, over a first time period, an RF signal on each RF channel of the first portion of the channel sequence using a first transmitter and a first antenna; transmitting, over a second time period, an RF signal on each RF channel of the second portion of the channel sequence using a second transmitter and a second antenna, wherein the second time period at least partially overlaps with the first time period; receiving, at a first receiver and a second receiver, reflected RF signals in response to the RF signals transmitted; and generating a frequency-stitched channel impulse response from the reflected RF signals received.

It will be appreciated that any embodiment or feature described above in connection with the first aspect of this

3

disclosure applies equally to the second aspect of this disclosure.

Transmitting an RF signal may comprise modulating an RF signal onto a respective carrier frequency of the respective RF channel of the channel sequence.

Optionally, generating the frequency-stitched channel impulse response comprises applying a frequency stitching algorithm to the reflected RF signals received.

Optionally, each RF channel has a bandwidth of approximately 500 MHz, or 1 GHz. In some embodiments, each RF channel has a bandwidth of 499.2 MHz.

Optionally, a time gap may be provided between each RF signal transmitted.

Optionally, the second time period and the first time period are concurrent, or the second time period and the first time period completely overlap.

Optionally, each portion of the channel sequence comprises at least two of the plurality of RF channels.

Optionally, the plurality of RF channels in the channel sequence do not overlap. Thus, the respective carrier frequency and bandwidth of each RF channel may be selected such that a frequency gap is provided between each RF channel.

Optionally, adjacent RF channels in the channel sequence at least partially overlap.

Optionally, each RF signal is an Ultra-Wide-Band (UWB) RF signal.

Optionally, the plurality of RF channels in the channel sequence comprises channels as defined in the IEEE 802.15.4 standard. For example, the channel sequence may comprise channels CH5, CH6, CH8, CH9.

Optionally, the method comprises dividing the channel sequence into three or more portions, wherein each portion of the channel sequence is transmitted by a respective transmitter and antenna.

Optionally, the method comprises dividing the channel sequence into the first portion, the second portion and a third portion and transmitting, over a third time period, an RF signal on each RF channel of the third portion of the channel sequence using a third transmitter and a third antenna, wherein the third time period at least partially overlaps with at least one of the first time period or the second time period.

Optionally, the method comprises receiving, at the first receiver, the second receiver and a third receiver, reflected RF signals in response to the RF signals transmitted.

Optionally, the third time period at least partially overlaps with both the first time period and the second time period.

Optionally, the third time period is concurrent (i.e. completely overlaps) with the first time period and the second time period.

Optionally, the first receiver is coupled to the first antenna, or a further (e.g. fourth) antenna.

Optionally, the second receiver is coupled to the second antenna, or a further (e.g. fifth) antenna.

Optionally, the third receiver is coupled to the third antenna, or a further (e.g. sixth) antenna.

Optionally, the method of performing a multi-transmitter frequency stitching process forms part of an automotive radar sensing method.

BRIEF DESCRIPTION OF THE DRAWINGS

Embodiments of this disclosure will be described hereinafter, by way of example only, with reference to the accompanying drawings in which like reference signs relate to like elements and in which:

**Figure 1** shows a diagram illustrating a channel sequence for frequency stitching according to the prior art;
**Figure 2** is a box diagram representing an embodiment of a radar system according to the prior art;
**Figure 3** shows a diagram illustrating a channel sequence for frequency stitching according to an embodiment of this disclosure;
**Figure 4** shows a diagram illustrating a channel sequence for frequency stitching according to another embodiment of this disclosure;
**Figure 5** is a box diagram representing an embodiment of a radar system for transmitting the channel sequence as shown in Figure 3, according to an embodiment of this disclosure;
**Figure 6** is a box diagram representing another embodiment of a radar system according to this disclosure;
**Figure 7** is a box diagram representing another embodiment of a radar system according to this disclosure;
**Figure 8** illustrates a chip implementation according to an embodiment of a radar system according to this disclosure;
**Figure 9** illustrates a chip implementation according to another embodiment of a radar system according to this disclosure; and
**Figure 10** is a flowchart illustrating a method of performing a multi-transmitter frequency stitching process according to an embodiment of this disclosure.

DETAILED DESCRIPTION

Embodiments of this disclosure are described in the following with reference to the accompanying drawings. It will be appreciated that the drawings are provided for illustrative purposes only, and features are not shown to scale unless a scale is explicitly indicated.

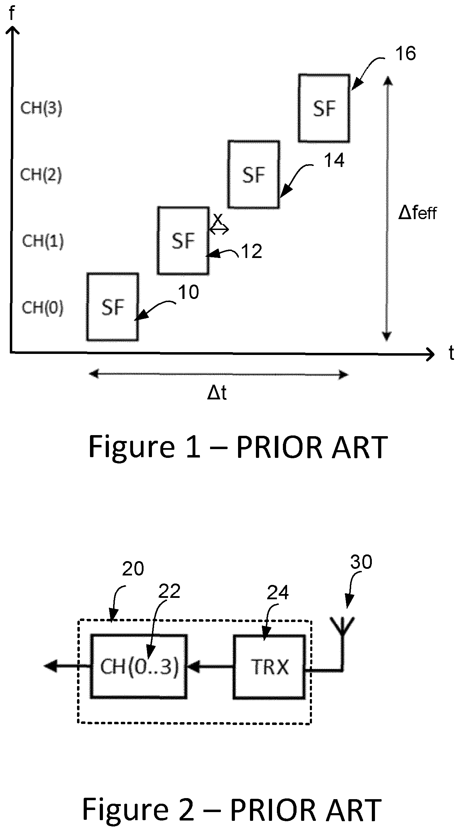

Frequency stitching is a known technique in radar systems or radar sensing / ranging systems. A channel (or RF channel) is a radio frequency channel having a bandwidth (e.g. in Hz), which is the frequency width of the channel, and a carrier frequency (e.g. in Hz), which is the central frequency of the channel. The purpose of frequency stitching is to achieve a total effective bandwidth larger than a channel bandwidth by combining (i.e. stitching together) RF signals on multiple adjacent channels, thereby improving sensing performance metrics such as signal-to-noise ratio or detection accuracy. An example of a channel sequence (or channel order) for use in frequency stitching according to the prior art is shown in Figure 1.

In Figure 1 the channel sequence comprises a first channel CH(0), a second channel CH(1), a third channel CH(2) and a fourth channel CH(3). It will be appreciated that the notation CH(X) is just representative of nominal channel frequencies and the notation does not have any particular meaning in the art. Frequency stitching can be performed with overlapping or non-overlapping channels, wherein overlapping refers to frequency overlap of the channels. The example in Figure 1 has no overlap between adjacent channels. The carrier frequency grid configuration can be used to determine the percentage of overlap. For example, if the channel bandwidth is 499.2 MHz then the gap between adjacent carrier frequencies may be selected as 124.8 MHz, 249.6 MHz, 374.4 MHz and 499.2 MHz indicating an overlap of 75%, 50%, 25%, and 0% (no overlap), respectively.

A radar system or apparatus as shown in Figure 2 may be used to perform the frequency stitching process based on the channel sequence shown in Figure 1. The system 20 comprises a processor 22 and a transmitter and receiver unit 24. The transmitter and receiver unit (TRX) 24 is coupled to an antenna 30 for transmitting RF signals.

During transmission of the radar signals, an RF signal (or sensing frame) is transmitted on each channel CH(0) to CH(3) of the sequence, via the antenna 30, with a time gap of x between adjacent RF signals (or sensing frames). Typically, the time gap x is of the order of a few microseconds up to a millisecond. Thus, a first RF signal or sensing frame 10 is transmitted on channel CH(0), a second RF signal or sensing frame 12 is transmitted on channel CH(1), a third RF signal or sensing frame 14 is transmitted on channel CH(2) and a fourth RF signal or sensing frame 16 is transmitted on channel CH(3). In the present disclosure, it will be appreciated that transmitting an RF signal "on a channel" in practice means that an RF signal is modulated onto the carrier frequency of said channel.

Accordingly, the total effective bandwidth of the transmitted RF signals ($\Delta f_{eff}$) is in this example equal to the sum of the bandwidths of each channel in the sequence, as the channels do not overlap. The total time taken to transmit the signals across the whole channel sequence is $\Delta t$, which is referred to as the coherence time. The reflected RF signals are then received at TRX 24 and combined together by the processor 22 to form a frequency stitched channel impulse response.

Thus, in the prior art, the RF signals are transmitted via a transmitter coupled to an antenna 30, reflections are received from the environment, channel impulse responses (CIRs) are generated from the reflections in the receiver, the resulting CIRs are combined by a processor 22 to form a CIR that corresponds to the frequency stitched channels, i.e. to an equivalent channel whose total effective bandwidth is $\Delta f_{eff}$ Hz. Because there is only one antenna the required antenna bandwidth equals the total effective bandwidth.

A problem with this frequency stitching technique is that it can pose stringent requirements on the system implementation in order to achieve the desired advantages provided by a large effective bandwidth. Firstly, with regards to coherence time ($\Delta t$), it is assumed that the target (i.e. the target or target object of the radar system) is stationary during the measurement time to avoid any errors. Thus, the more channels are stitched together, the longer the required coherence time, and this assumption limits the performance and the potential use cases for frequency stitching. Secondly, the more channels are stitched the larger the effective antenna bandwidth ($\Delta f_{eff}$) is, which places design limitations on the antenna 30, as the antenna 30 must be supporting this entire bandwidth (i.e. capable of transmitting and receiving RF signals across the entire effective bandwidth), which can make the antenna design more challenging, increase costs and limit antenna choices. Accordingly, the effective antenna bandwidth in this example is equal to the total effective bandwidth ($\Delta f_{eff}$).

The present disclosure seeks to mitigate these problems, whilst still providing the advantages resulting from large effective bandwidth frequency stitching of improving sensing performance metrics such as signal-to-noise ratio or detection accuracy.

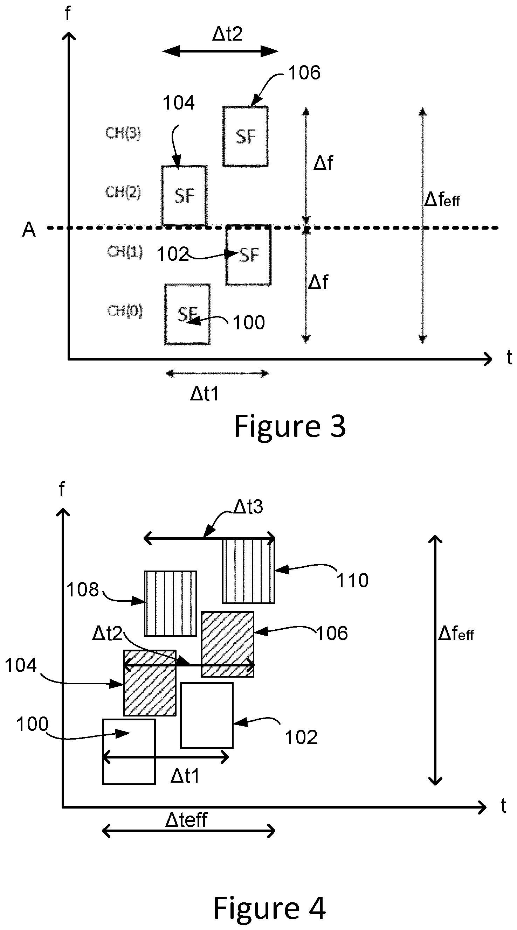

In the present disclosure, the aforementioned problems are solved by splitting or dividing the channel sequence into at least two portions (or channel sub-sequences) and transmitting those portions (or sub-sequences) at least partially overlapping in time over multiple transmitters. Embodiments of a channel sequence (or channel order) for use in frequency stitching according to the present disclosure are shown in Figures 3 and 4.

In Figure 3, the channel sequence CH(0), CH(1), CH(2), CH(3), is divided into a first portion (CH(0) + CH(1)) and a second portion (CH(2) + CH(3)) as represented by the dotted line A. Although in this embodiment the channel sequence comprises four channels, it will be appreciated that any number of channels (e.g. two or more) may be provided in the sequence. Moreover, although each portion of the channel sequence in Figure 3 comprises two channels, it will be appreciated that the number of channels may not be divided equally between the portions. In some embodiments, a portion of the channel sequence may comprise a single channel, and another portion may comprise two or more channels.

In the embodiment shown in Figure 3, during a first time period $\Delta t1$, a first RF signal or sensing frame 100 is transmitted on channel CH(0) and second RF signal or sensing frame 102 is transmitted on channel CH(1) by a first transmitter (TX1, TRX1) coupled to a first antenna. During a second time period $\Delta t2$, a third RF signal or sensing frame 104 is transmitted on channel CH(2) and a fourth RF signal or sensing frame 106 is transmitted on channel CH(3) by a second transmitter (TX2, TRX2) coupled to a second antenna. In this embodiment, the first time period $\Delta t1$ and the second time period $\Delta t2$ are concurrent or completely overlap. Thus, the RF signals 104, 106 of the second portion of the channel sequence are transmitted at the same time as the RF signals 100, 102 of the first portion of the channel sequence. A time gap is still provided between adjacent RF signals 100 and 102 and between adjacent RF signals 104 and 106.

Although the notation CH(0) - CH(3) is used for the carrier frequencies of the sequence in Figure 3, for conformity with Figure 1, in some embodiments the carrier frequencies of the channel sequence may be selected to correspond to channels defined in the IEEE 802.15.4 standard, for example channels CH5, CH6, CH8, CH9. Thus, in the present disclosure the RF signals may be UWB radar signals. The radar system may be (or form part of) a UWB radar system, or form part of an UWB ranging/detection system.

In some embodiments of the present disclosure, a channel sequence may be divided into more than two portions, as shown in Figure 4. In the embodiment shown in Figure 4, the channel sequence is divided into three portions. A first portion of the channel sequence corresponds to the white rectangles, 100, 102, a second portion of the channel sequence corresponds to the diagonal striped rectangles, 104, 106, and a third portion of the channel sequence corresponds to the vertical striped rectangles 108, 110.

In this embodiment, during a first time period $\Delta t1$, a first RF signal or sensing frame 100 is transmitted on a first channel and second RF signal or sensing frame 102 is transmitted on a second channel by a first transmitter coupled to a first antenna. During a second time period $\Delta t2$, a third RF signal or sensing frame 104 is transmitted on a third channel and a fourth RF signal or sensing frame 106 is transmitted on a fourth channel by a second transmitter coupled to a second antenna. During a third time period $\Delta t3$, a fifth RF signal or sensing frame 108 is transmitted on fifth channel and a sixth RF signal or sensing frame 110 is transmitted on a sixth channel by a third transmitter coupled to a third antenna. The first time period $\Delta t1$, the second time period $\Delta t2$ and the third time period $\Delta t3$ all partially overlap. In other embodiments, only two of the time periods may at least partially overlap.

In Figure 4, adjacent channels in the sequence have an overlap (or frequency overlap) of about 50% of the channel bandwidth, whereas there is no channel overlap in the embodiment shown in Figure 3. Typically, in the present disclosure each channel has a respective bandwidth of approximately 500 MHz or 1 GHz. In addition, the channel sequence (or channel order) used in frequency stitching can be in-sequence or out-of-sequence. In Figures 3 and 4 the channel sequence is in-sequence, i.e. the carrier frequency of each adjacent channel is ascending. However, it will be appreciated that in other embodiments of this disclosure out-of-sequence channel sequences may be provided.

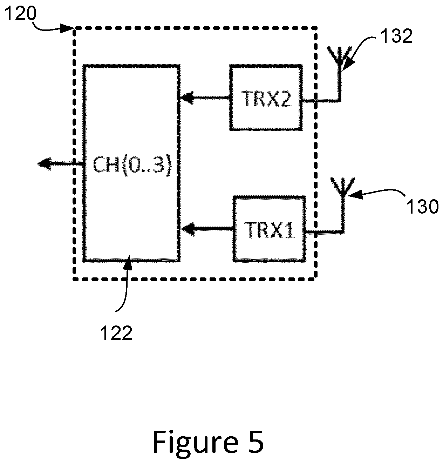

Accordingly, as shown in Figures 3 and 4, as each portion of the channel sequence is transmitted by a respective transmitter coupled to a separate antenna (see Figures 5-9), the total coherence time is reduced, allowing the overall radar/ranging system to detect faster moving targets or making less errors during detection. In addition, each antenna is only required to support a bandwidth of $\Delta f$ (i.e. the effective bandwidth of the respective portion of the channel sequence) rather than the total effective bandwidth $\Delta feff$ of the entire channel sequence. This makes antenna design less challenging, reduces costs and improves the antenna choices available.

An embodiment of a radar system according to the present disclosure is shown in Figure 5. The radar system 120 comprises a processor 122, a first transmitter and a first receiver (TRX1), a second transmitter and a second receiver (TRX2). TRX1 is coupled to a first antenna 130 and TRX2 is coupled to a second antenna 132. As shown in Figure 5, the antenna 130, 132 may not form part of the system 120, as the antennae 130, 132 can be provided externally to the radar system 120. However, in some embodiments, the antennae 130, 132 may form part of the radar system 120. The first and second antenna 130, 132 are each configured to radiate radio waves, generated from RF signals received from the respective transmitter, into an environment. Thus, as is standard in the art, the transmitters generate the electrical RF signals (or RF current) which is converted into radio waves and output by the antenna.

The first transmitter TRX1 is configured to transmit RF signals on each channel of the first portion of the channel sequence, and the second transmitter TRX2 is configured to transmit RF signals on each channel of the second portion of the channel sequence (as shown in Figure 3). If the channel sequence is divided into more than two portions (e.g. as in Figure 4) then additional transmitters and receivers are required, as the number of TRX units must correspond to the number of portions that the channel sequence is divided into.

The transmitted RF signals are reflected by the environment. The resulting channel impulse responses are received at the antennae 130, 132 and are converted back into electrical signals by the corresponding receivers RX1 and RX2. The channel impulse responses are processed and combined by the processor 122 to form a channel impulse response that corresponds to the frequency stitched channels. The processor 122 may be a microcontroller or other type of processing device. The processor 122 may comprise a plurality of processors, microcontrollers or processing devices in communication with each other.

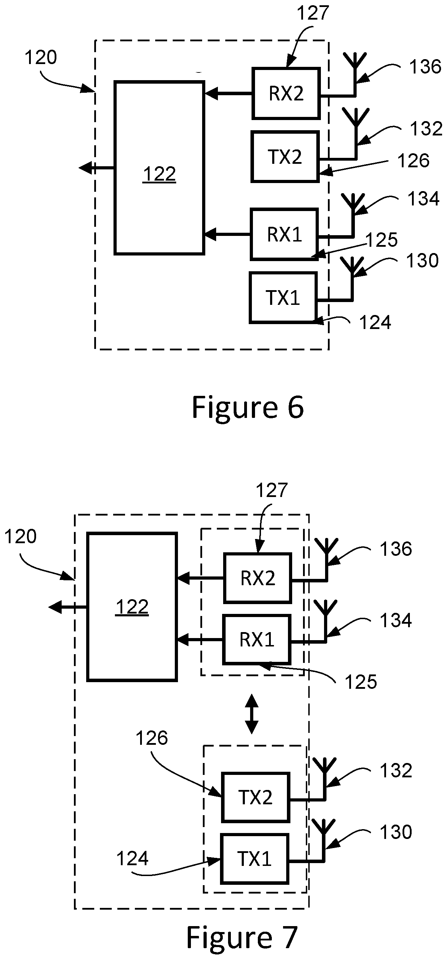

The notation TRX1, TRX2 is typically used to refer to a monostatic radar system (see Figure 6), but separate transmitters and receivers may be provided. It will be appreciated that Figure 5 is a functional diagram, and that the radar system (and the units represented therein) in practice comprises all circuity and components that are standard to such radar/RF systems. In the present disclosure, each transmitter is configured to modulate an RF signal onto a carrier frequency of a selected RF channel, and each receiver is configured to demodulate an RF signal from a carrier frequency of a selected RF channel. As such, each transmitter-receiver unit (or TRX unit) typically comprises a transmitter unit, a receiver unit and a carrier generation unit, which are taken to form part of the TRX unit in Figure 5. The transmitter unit may comprise a RF digital-to-analog converter, or a mixer and a power amplifier. The receiver unit may comprise a low-noise amplifier, a mixer, or analog filters. The carrier generation unit may comprise an RF phase-locked loop and local oscillator generation circuits, such as frequency dividers.

It will be appreciated that a potential drawback to the multi-transmitter solution provided by the present disclosure is that at least a second transmitter and receiver is required which increases the overall implementation complexity (chip area, power consumption). However, there are many use cases where, in practice, this does not present an issue, particularly in light of the technical advantages provided by the improved frequency stitching and relaxed antenna requirements. In some embodiments, the radar system may be (or form part of) a dual-TRX radar chip, or may be used in a multi-device radar system, for example for use in a child presence detection system in an automotive environment (in-cabin sensing). It will be appreciated that these are just two possible applications of the systems and methods of the present disclosure.

Figure 6 shows an embodiment of a monostatic radar system according to the present disclosure. In this embodiment the radar system 120 comprises a first transmitter TX1 124 and a first receiver RX1 125 which are collocated; and a second transmitter TX2 126 and a second receiver RX2 127 which are collocated. A first antenna 130 is coupled to the first transmitter 124 and a second transmitter 132 is coupled to the second transmitter 126. Rather than the receivers being coupled to the same antenna as the associated transmitter, as in Figure 5, additional antennae are provided. Thus, the first receiver 125 is coupled to a third antenna 134 and the second receiver 127 is coupled to a fourth antenna 136.

Figure 7 shows an embodiment of a multistatic radar system according to the present disclosure. In this embodiment, there is physical space provided between the receivers and the corresponding transmitters. Thus, the first receiver 125 and the second receiver 127 are physically separated from the first transmitter 124 and the second transmitter 126. The antenna arrangement is the same as in Figure 6.

In some embodiments, the radar system shown in Figures 6 or 7 may comprise a plurality of additional transmitters and receivers, collocated or physically separated, each coupled to respective antennae, wherein the number of transmitters, receivers and antennae corresponds to the number of portions into which the channel sequence is divided. In other embodiments, one or more transmitter and receiver pairs may share a common antenna (as in Figure 5).

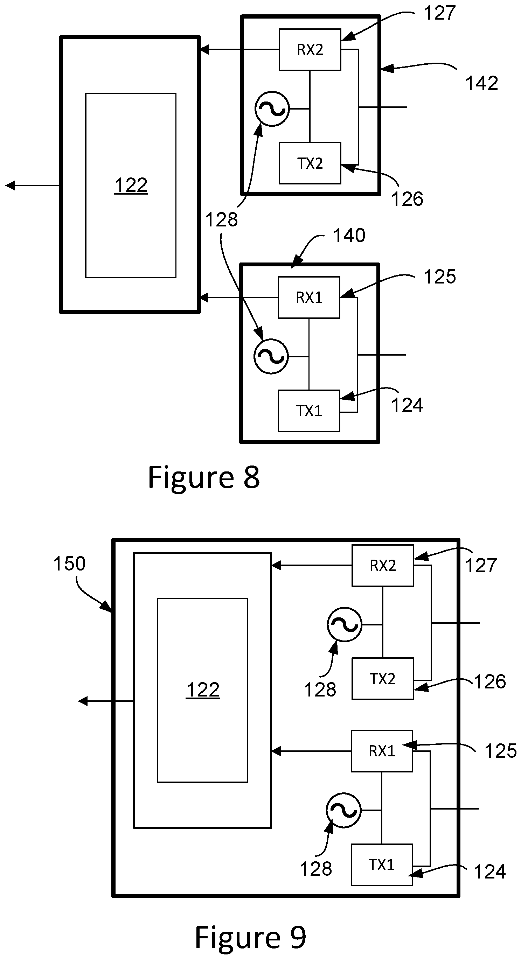

Two of the possible chip implementations of the radar system according to the present invention are shown in Figures 8 and 9. In Figure 8, two separate integrated circuits (or chips, or devices) 140, 142 are provided. A first integrated circuit 140 comprises the first transmitter 124 and the first receiver 125 and a local oscillator 128. A second integrated circuit 142 comprises the second transmitter 126 and the second receiver 127 and a local oscillator 128. Electrical connections are provided on each integrated circuit 140,142 for coupling to one or more antennae. A separate processor (e.g. a microcontroller) 122 is provided to perform the frequency stitching.

In Figure 9, a single integrated circuit (or chip or device) 150 is provided. The single integrated circuit 150 comprises the first transmitter and receiver 124, 125, the second transmitter and receiver 126, 127, two local oscillators 128 and an on-chip processor (or controller) 122. Electrical connections are provided for coupling to at least two antennae.

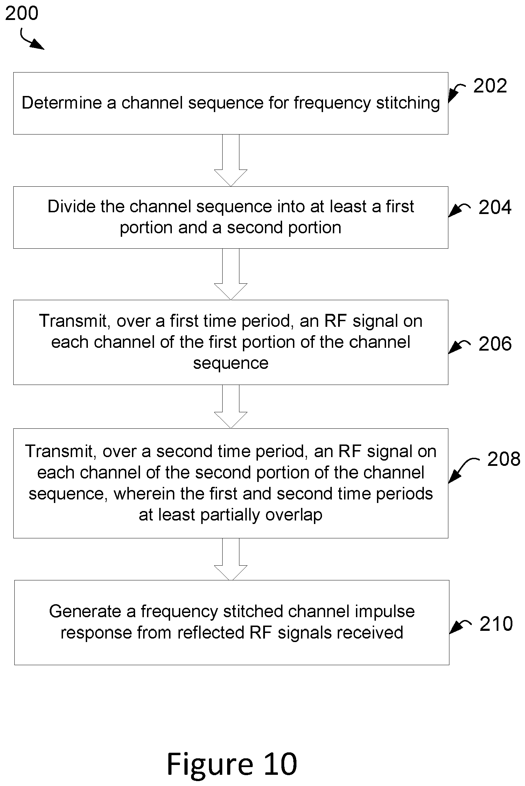

A method of performing the multi-transmitter frequency stitching process 200 according to an embodiment of the present disclosure is shown in Figure 10. Initially, at step 202, a channel sequence is provided for frequency stitching.

The channel sequence may be defined in the IEEE 802.15.4ab amendment, and is given by the channel mapping function:

$$CH(\ f(p(OF+1)) + q\ ),\ p = 0,1,\ldots,N\text{-}1,\ q>=0,$$

where p is an integer from 0 to N-1, N is the total number of channels to be stitched, OF is an overlap factor, q is a channel offset, and the function f is:

$$f(x) = x - (N-1) \lfloor x/N \rfloor$$

with $\lfloor \cdot \rfloor$ denoting the floor function. Thus, the channel sequence is generated by sampling the function f(x) at the points p(OF+1), p=0,...,N-1, and adding the channel offset q.

If N = 4, OF = 0 and q = 0, the channel sequence is CH(0), CH(1), CH(2), CH(3) and, in accordance with the earlier example, the first and second portion (or channel subsequence) for transmission may be CH(0), CH(1) and CH(2), CH(3), respectively. Again, in some embodiments the channels may be UWB channels corresponding to the channels CH5, CH6, CH8, CH9 as defined in the IEEE 802.15.4 standard, respectively.

At step 204, the channel sequence is divided into at least a first portion and a second portion (thus, a plurality N of portions or sub-sequences are provided, where N is any integer greater than or equal to 2).

At step 206, over a first time period, the first portion of the channel sequence is transmitted over a first transmitter coupled to a first antenna. Transmitting the first portion of the channel sequence in practice means that an RF signal is transmitted on each channel of the first portion of the channel sequence (i.e. an RF signal is modulated onto the respective carrier frequency of each channel in the first portion of the sequence), as shown in Figures 3 and 4.

At step 208, over a second time period, the second portion of the channel sequence is transmitted over a second transmitter coupled to a second antenna. Transmitting the second portion of the channel sequence in practice means that an RF signal is transmitted on each channel of the second portion of the channel sequence (i.e. an RF signal is modulated onto the respective carrier frequency of each channel in the second portion of the sequence), as shown in Figures 3 and 4. As the first and second time periods at least partially overlap, steps 206 and 208 are at least partially performed at the same time.

If the channel sequence is divided into three or more portions, then steps 206/208 are replicated for each additional portion of the channel sequence, until the entire channel sequence has been transmitted.

At step 210, the reflected RF signals from the transmissions are received at the radar system and the channel impulse responses are processed to generate a frequency stitched channel impulse response. Step 210 may comprise applying a known frequency stitched algorithm to the received channel impulse responses, of which a variety of suitable algorithms are known in the art.

Accordingly, there has been described a radar system comprising a first transmitter and a first receiver, a second transmitter and a second receiver and a processor, wherein the processor is configured to determine a channel sequence for frequency stitching; divide the channel sequence into a first portion and a second portion; instruct the first transmitter to transmit, over a first time period, an RF signal on each RF channel of the first portion of the channel sequence; instruct the second transmitter to transmit, over a second time period, an RF signal on each RF channel of the second portion of the channel sequence, wherein the second time period at least partially overlaps with the first time period; and generate a frequency-stitched channel impulse response from reflected RF signals received at each receiver in response to the RF signals transmitted. Corresponding systems and methods are also disclosed above.

Although particular embodiments of this disclosure have been described, it will be appreciated that many modifications/additions and/or substitutions may be made within the scope of the claims.

**Claims**

1. A radar system, comprising:

    a first transmitter;
    a second transmitter;
    a first receiver;
    a second receiver; and
    a processor electrically coupled to the first and second transmitters and the first and second receivers, wherein the processor is configured to:

        determine a channel sequence for frequency stitching, wherein the channel sequence comprises a plurality of RF channels, each RF channel having a respective carrier frequency and a bandwidth;
        divide the channel sequence into a first portion and a second portion;
        instruct the first transmitter to transmit, over a first time period, an RF signal on each RF channel of the first portion of the channel sequence;
        instruct the second transmitter to transmit, over a second time period, an RF signal on each RF channel of the second portion of the channel sequence, wherein the second time period at least partially overlaps with the first time period; and
generate a frequency-stitched channel impulse response from reflected RF signals received at each receiver in response to the RF signals transmitted.

2. The radar system of claim 1, wherein the second time period and the first time period are concurrent, or completely overlap.

3. The radar system of claim 1 or claim 2, wherein each portion of the channel sequence comprises at least two of the plurality of RF channels.

4. The radar system of any preceding claim, wherein the plurality of RF channels in the channel sequence do not overlap.

5. The radar system of any preceding claim, wherein each RF signal is an UWB RF signal.

6. The radar system of any preceding claim, wherein the plurality of RF channels in the channel sequence comprises channels as defined in the IEEE 802.15.4 standard.

7. The radar system of any preceding claim, further comprising a third transmitter and a third receiver, wherein the processor is further configured to:

divide the channel sequence into the first portion, the second portion and a third portion; and
instruct the third transmitter to transmit, over a third time period, an RF signal on each RF channel of the third portion of the channel sequence, wherein the third time period at least partially overlaps with at least one of the first time period or the second time period.

8. The radar system of claim 7, wherein the third time period at least partially overlaps with both the first time period and the second time period.

9. The radar system of any preceding claim, further comprising:
a plurality of antennae, wherein each antenna is coupled to a respective transmitter and/or receiver of the radar system.

10. A method of performing a multi-transmitter frequency stitching process, the method comprising:

determining a channel sequence for frequency stitching, wherein the channel sequence comprises a plurality of RF channels, each RF channel having a respective carrier frequency and a bandwidth;
dividing the channel sequence into a first portion and a second portion;
transmitting, over a first time period, an RF signal on each RF channel of the first portion of the channel sequence using a first transmitter and a first antenna;
transmitting, over a second time period, an RF signal on each RF channel of the second portion of the channel sequence using a second transmitter and a second antenna, wherein the second time period at least partially overlaps with the first time period;
receiving, at a first receiver and a second receiver, reflected RF signals in response to the RF signals transmitted; and
generating a frequency-stitched channel impulse response from the reflected RF signals received.

11. The method of claim 10, wherein generating the frequency-stitched channel impulse response comprises applying a frequency stitching algorithm to the reflected RF signals received.

12. The method of claim 10 or claim 11, wherein the second time period and the first time period are concurrent, or completely overlap.

13. The method of any of claims 10 to 12, wherein each RF signal is an UWB RF signal.

14. The method of any of claims 10 to 13, further comprising:

dividing the channel sequence into the first portion, the second portion and a third portion;

transmitting, over a third time period, an RF signal on each RF channel of the third portion of the channel sequence using a third transmitter and a third antenna, wherein the third time period at least partially overlaps with at least one of the first time period or the second time period; and

receiving, at the first receiver, the second receiver and a third receiver, reflected RF signals in response to the RF signals transmitted.

**15.** The method of any of claim 14, wherein:

the first receiver is coupled to the first antenna, or a fourth antenna;
the second receiver is coupled to the second antenna, or a fifth antenna; and
the third receiver is coupled to the third antenna, or a sixth antenna.

Figure 1 – PRIOR ART

Figure 2 – PRIOR ART

Figure 3

Figure 4

120

132

TRX2

CH(0..3)

TRX1

130

122

Figure 5

Figure 6

Figure 7

Figure 8

Figure 9

200

Determine a channel sequence for frequency stitching — 202

Divide the channel sequence into at least a first portion and a second portion — 204

Transmit, over a first time period, an RF signal on each channel of the first portion of the channel sequence — 206

Transmit, over a second time period, an RF signal on each channel of the second portion of the channel sequence, wherein the first and second time periods at least partially overlap — 208

Generate a frequency stitched channel impulse response from reflected RF signals received — 210

# Figure 10

Europäisches
Patentamt
European
Patent Office
Office européen
des brevets

# EUROPEAN SEARCH REPORT

**Application Number**

EP 24 20 0935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JENA PARAMANANDA ET AL: "MIMO Synthetic Impulse and Aperture Radar(SIAR) for Anti-Stealth Applications", 2022 IEEE MICROWAVES, ANTENNAS, AND PROPAGATION CONFERENCE (MAPCON), IEEE, 12 December 2022 (2022-12-12), pages 1589-1593, XP034299975, DOI: 10.1109/MAPCON56011.2022.10047082 [retrieved on 2023-02-24] * abstract * * paragraphs [00II], [0III], [VIII]; figures 1-7 * ----- | 1-15 | INV. G01S13/00 G01S13/02 G01S13/06 |
| A | US 2024/085552 A1 (KIM DONGSIK [US] ET AL) 14 March 2024 (2024-03-14) * abstract * * paragraphs [0001], [0018], [0021], [0051], [0056] - [0084]; figures 4-7 * ----- | 1-15 | |
| A | US 2021/156982 A1 (STETTINER YORAM [IL] ET AL) 27 May 2021 (2021-05-27) * abstract * * paragraphs [0001], [0036], [0041], [0130]; figure 7 * * paragraph [0152]; figure 12 * * paragraph [0162]; figure 18 * ----- -/-- | 1-15 | **TECHNICAL FIELDS SEARCHED (IPC)** G01S |

The present search report has been drawn up for all claims

| Place of search | Date of completion of the search | Examiner |
|---|---|---|
| Munich | 4 March 2025 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 20 0935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BIN QIAN ET AL: "Frequency stitching in ranging", IEEE DRAFT; 15-24-0026-01-04AB-FREQUENCY-STITCHING-IN-RANGING, IEEE-SA MENTOR, PISCATAWAY, NJ USA , vol. 802.15.4ab, no. 1 15 January 2024 (2024-01-15), pages 1-14, XP068275089, Retrieved from the Internet: URL:https://mentor.ieee.org/802.15/dcn/24/15-24-0026-01-04ab-frequency-stitching-in-ranging.pptx [retrieved on 2024-01-15] * pages 3-13 * ----- | 1-15 | |

TECHNICAL FIELDS
SEARCHED     (IPC)

The present search report has been drawn up for all claims

| Place of search | Date of completion of the search | Examiner |
|---|---|---|
| Munich | 4 March 2025 | van Norel, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 0935

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | | Publication date |
|---|---|---|---|---|---|
| US 2024085552 | A1 | 14-03-2024 | US | 2024085552 A1 | 14-03-2024 |
| | | | WO | 2024059372 A1 | 21-03-2024 |
| US 2021156982 | A1 | 27-05-2021 | CN | 112088316 A | 15-12-2020 |
| | | | CN | 112088317 A | 15-12-2020 |
| | | | CN | 112105946 A | 18-12-2020 |
| | | | EP | 3791201 A1 | 17-03-2021 |
| | | | EP | 3791202 A1 | 17-03-2021 |
| | | | EP | 3791203 A1 | 17-03-2021 |
| | | | IL | 259190 A | 28-06-2018 |
| | | | US | 2021156980 A1 | 27-05-2021 |
| | | | US | 2021156981 A1 | 27-05-2021 |
| | | | US | 2021156982 A1 | 27-05-2021 |
| | | | WO | 2019215732 A1 | 14-11-2019 |
| | | | WO | 2019215733 A1 | 14-11-2019 |
| | | | WO | 2019215734 A1 | 14-11-2019 |

EPO FORM P0459

For more details about this annex : see Official Journal of the European Patent Office, No. 12/82